# EUROPÄISCHE PATENTSCHRIFT

(11) **EP 1 771 270 B1**
(45) Veröffentlichungstag und Bekanntmachung des Hinweises auf die Patenterteilung: **11.04.2012**
(21) Anmeldenummer: 05769962.1
(22) Anmeldetag: 25.07.2005
(51) Int. Cl.: B23H 9/10, B23H 3/00, B23H 3/02

(54) **VERFAHREN ZUM HERSTELLEN AERODYNAMISCHER STRUKTUREN BEI DER FERTIGUNG VON INTEGRAL BESCHAUFELTEN GASTURBINENROTOREN**
METHOD FOR PRODUCING AERODYNAMIC STRUCTURES DURING THE PRODUCTION OF INTEGRALLY BLADED GAS TURBINE ROTORS
PROCEDE POUR PRODUIRE DES STRUCTURES AERODYNAMIQUES LORS DE LA PRODUCTION DE ROTORS DE TURBINE A GAZ A PALES INTEGREES

(30) Priorität: 28.07.2004 DE 102004036598
(43) Veröffentlichungstag der Anmeldung: 11.04.2007
(73) Patentinhaber: MTU Aero Engines GmbH, 80995 München (DE)
(72) Erfinder: BAYER, Erwin, 85221 Dachau (DE); BUSSMANN, Martin, 85247 Schwabhausen (DE); KRÄNZLER, Thomas, 88682 Salem (DE); PLATZ, Albin, 86510 Ried-Baindlkirch (DE); STEINWANDEL, Jürgen, 88690 Uhldingen-Mühlhofen (DE)
(86) Internationale Anmeldenummer: PCT/DE2005/001310
(87) Internationale Veröffentlichungsnummer: WO 2006/012852

(56) Entgegenhaltungen:
- EP-A- 1 314 507
- EP-A- 1 433 558
- US-A- 5 149 405
- US-A1- 2002 169 516

## Beschreibung

Die Erfindung betrifft ein Verfahren zum Herstellen aerodynamischer Strukturen bei der Fertigung von integral beschaufelten Gasturbinenrotoren gemäss dem Oberbegriff des Anspruchs 1. Ein derartiges Verfahren ist aus EP-A-1 314 507 bekannt.

Im Flugtriebwerksbau kommen als Gasturbinenrotoren zunehmend integral beschaufelte Gasturbinenrotoren zum Einsatz, wobei bei solchen integral beschaufelten Gasturbinenrotoren die Laufschaufeln integraler Bestandteil des Rotors sind. Solche integral beschaufelten Gasturbinenrotoren werden auch als Blisk (Bladed Disk) oder Bling (Bladed Ring) bezeichnet. Derartige integral beschaufelte Gasturbinenrotoren bestehen aus metallischen Werkstoffen, insbesondere aus schwer zerspanbaren Werkstoffen, wie Titanbasislegierungen, Nickelbasislegierungen oder Kobaltbasislegierungen. Nach dem Stand der Technik kommen zur Herstellung solcher integral beschaufelten Gasturbinenrotoren, die durch komplexe aerodynamische Strukturen insbesondere im Bereich der Schaufelblätter gekennzeichnet sind, zerpanende Bearbeitungsverfahren, wie zum Beispiel Fräsverfahren, zum Einsatz. Das Herstellen integral beschaufelter Gasturbinenrotoren aus schwer zerspanbaren Werkstoffen mit Fräsverfahren erfordert einen hohen Aufwand und ist äußerst zeitintensiv sowie kostenintensiv. Darüber hinaus sind nach dem Fräsen in der Regel noch weitere Bearbeitungsschritte, wie zum Beispiel ein Glattschleifen, erforderlich. Das Herstellen von aerodynamischen Strukturen bei der Fertigung integral beschaufelter Gasturbinenrotoren ist demnach mit einer Vielzahl von Nachteilen verbunden.

Der vorliegenden Erfindung liegt das Problem zu Grunde, ein neuartiges Verfahren zum Herstellen aerodynamischer Strukturen bei der Fertigung von integral beschaufelten Gasturbinenrotoren zu schaffen.

Dieses Problem wird durch ein Verfahren gemäß Patentanspruch 1 gelöst. Erfindungsgemäß wird ein Verfahren zum Herstellen endkonturgenauer, aerodynamischer Strukturen bei der Fertigung von integral beschaufelten Gasturbinenrotoren mit zumindest folgenden Schritten vorgeschlagen: a) Bereitstellen eines Rotorscheibengrundkörpers aus einem schwer zerspanbaren Werkstoff; b) Abtragen des Werkstoffes zwischen den Schaufelblättern bis auf ein bestimmtes Aufmass durch einen Abtragsprozess; c) Bereitstellen mindestens einer Arbeitselektrode zur Finishbearbeitung mindestens einer aerodynamischen Struktur eines integral beschaufelten Gasturbinenrotors, wobei die Kontur der oder jeder Arbeitselektrode an die Kontur der mit der jeweiligen Arbeitselektrode herzustellenden, aerodynamischen Struktur derart angepasst ist, dass beim Absenken ein Spalt zwischen dem Rotorscheibengrundkörper und einer Arbeitselektrode in etwa gleich groß ist; d) Absenken der oder jeder aerodynamischen Struktur durch Anordnen des Rotorscheibengrundkörpers und der oder jeder Arbeitselektrode in einem Elektrolyten und durch Anlegen einer Spannung bzw. eines Stroms, wobei der angelegte Strom bzw. die angelegte Spannung zeitlich gepulst wird; e) Zwangsspülen des mit Elektrolyten gefüllten Spalts zwischen der aerodynamischer Struktur und der oder jeder Arbeitselektrode durch eine pulsierende Bewegung der oder jeder Arbeitselektrode.

Im Sinne der hier vorliegenden Erfindung wird vorgeschlagen, aerodynamische Strukturen bei der Fertigung von integral beschaufelten Gasturbinenrotoren in einem zweistufigen Prozess abzusenken. Zum groben Herausarbeiten des Materials zwischen den Schaufeln kann ein normaler ECM-Prozess oder Fräsen, oder Räumen oder ein anderes abtragendes Verfahren herangezogen werden. Für das Herstellen der Endkontur des gesamten Schaufelblatts mit Vorderkante und Hinterkante, Übergang zum Ringraum und dem Ringraum soll ein weiterentwickeltes elektrochemisches Senkverfahren verwendet werden, bei dem der Elektrolyt durch eine Pulsationsbewegung der Elektrode ausgetauscht wird und bei dem der Abstand zwischen Bauteil und Elektrode, der so genannte Spalt, durch eine Analyse des Stromverlaufs des gepulsten Senkstromes ermittelt und geregelt wird. Die elektrochemische Pulsstromabsenkung stellt eine kostengünstige Fertigungsmethode für aerodynamische Strukturen an integral beschaufelten Rotoren dar, wobei die aerodynamischen Strukturen endkonturgenau fertigbar sind. Gegenüber dem Stand der Technik kann die Fertigungskette bei verbesserter Fertigungsqualität verkürzt werden. Das erfindungsgemäße Verfahren eignet sich vor allem für schwer zerspanbare Werkstoffe, wie Titanbasislegierungen, Nickelbasislegierungen oder auch Kobaltbasislegierungen.

Nach einer vorteilhaften Weiterbildung der Erfindung wird während des Absenkens ein Spalt zwischen dem Rotorscheibengrundkörper und der oder jeder Arbeitselektrode von kleiner als 0,5 mm, insbesondere von kleiner als 0,05 mm, eingehalten.

Nach einer weiteren vorteilhaften Weiterbildung der Erfindung wird während des Absenkens der oder jeder Spalt zwischen dem Rotorscheibengrundkörper und einer Arbeitselektrode kontinuierlich mit Elektrolyt, insbesondere über eine Zwangströmung des Elektrolyts durch den oder jeden Spalt, gespült. Vorzugsweise wird hierbei eine pulsierende Arbeitselektrode verwendet. Durch diese Pulsation der Elektrode wird der Elektrolytaustausch im Spalt zwischen Werkstück und Elektrode sichergestellt. Eine weitere bevorzugte Weiterbildung des Verfahrens ergibt sich aus der Anordnung der Elektroden für die Druckseite und Saugseite des Schaufelprofils. Damit die sich bei dem engen Spalt durch die Pulsation der Elektroden ergebenden Druckkräfte die Schaufel nicht verformen, wird das Schaufelprofil synchron von beiden Seiten hergestellt. Dabei sind die Hauptbewegungsrichtungen der Elektrodenpaare V-förmig. Damit kann das Schaufelprofil komplett in einem Arbeitsgang inklusive der Kanten, Übergangsradien und dem anteiligen Bereich des Ringraums endbearbeitet werden. Die V-förmige Anordnung der Elektrodenpaare kann zusammen mit den notwendigen Achsantrieben für die Vorschubbewegung und die Elektrodenpulsation an mehreren Stellen am Rotorscheibenkörper angeordnet werden, so dass sich die Bearbeitungszeit entsprechend verringert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

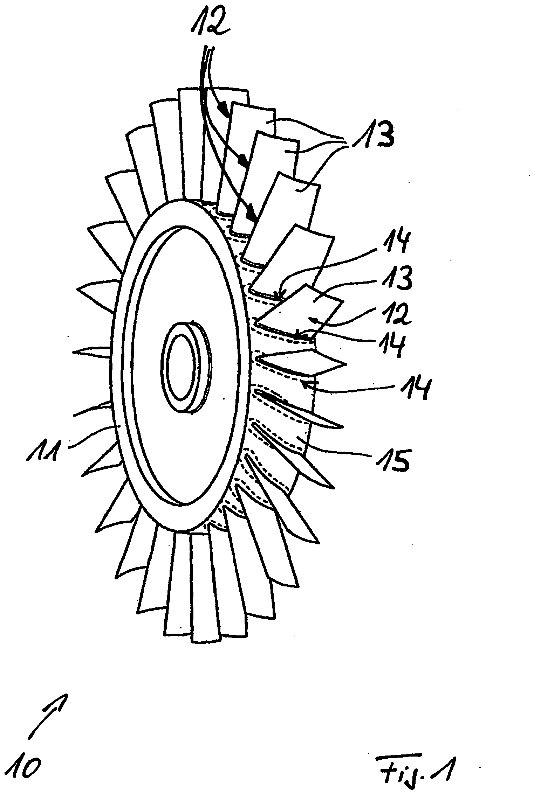

- Fig. 1: einen mit Hilfe des erfindungsgemäßen Verfahrens herzustellenden, integral beschaufelten Gasturbinerotor in schematisierter Darstellung.

Fig. 1 zeigt einen mit Hilfe des erfindungsgemäßen Verfahrens herzustellenden, integral beschaufelten Gasturbinenrotor 10. Der integral beschaufelte Gasturbinenrotor 10 gemäß Fig. 1 verfügt über eine Rotorscheibe 11 sowie mehrere über den Umfang der Rotorscheibe 11 verteilt angeordnete Laufschaufeln 12, wobei die Laufschaufeln 12 integraler Bestandteil der Rotorscheibe 11 sind. Ein derartiger integral beschaufelter Gasturbinenrotor 10 wird auch als Blisk bezeichnet.

Von den Laufschaufeln 12 sind in Fig. 1 Schaufelblätter 13 sowie gestrichelt dargestellte Übergangsbereiche 14 zwischen den Schaufelblättern 13 und einem Nabenbereich 15 der Rotorscheibe 11 gezeigt. Im Bereich der Schaufelblätter 13, nämlich sowohl im Bereich einer Saugseite als auch einer Druckseite der Schaufelblätter 13, im Übergangsbereich 14 sowie im Nabenbereich 15 ist ein solcher integral beschaufelter Gasturbinenrotor 10 durch aerodynamische Strukturen bzw. Oberflächen gekennzeichnet, die mit dem erfindungsgemäßen Verfahren auf folgende Art und Weise hergestellt werden:

Zunächst wird ein Rotorscheibengrundkörper aus einem schwer zerspanbaren Werkstoff, vorzugsweise aus einer Nickelbasislegierung, Titanbasislegierung oder Kobaltbasislegierung, bereitgestellt. In einem zweistufigen Prozess werden dann die Schaufelblätter hergestellt. Zuerst wird das Material bis auf ein gewisses Aufmass durch einen Abtragprozess herausgearbeitet. In diese Vorkontur werden in einem zweiten Schritt die aerodynamischen Strukturen des herzustellenden, integral beschaufelten Gasturbinenrotors durch Absenken mit einem elektrochemischen Abtragprozess endkonturgenau hergestellt. Als elektrochemischer Abtragprozess kommt ein weiterentwickelter Precise Electro Chemical Machining Process zum Einsatz, der auch als PECM-Prozess bezeichnet wird.

Neben dem Rotorscheibengrundkörper wird des weiteren mindestens eine Arbeitselektrode - in der Regel werden zwei Arbeitselektroden - bereitgestellt. Die Kontur der oder jeder Arbeitselektrode ist an die Kontur der mit der jeweiligen Arbeitselektrode herzustellenden, aerodynamischen Struktur bzw. Oberfläche derart angepasst, dass beim elektrochemischen Absenken ein Spalt zwischen dem Rotorscheibengrundkörper und einer Arbeitselektrode in etwa gleich groß ist.

Zum elektrochemischen Absenken wird sichergestellt, dass der Spalt zwischen dem Rotorscheibengrundkörper sowie der oder den Arbeitselektrode(n) mit Elektrolyt gefüllt ist. Der Elektrolyt wird durch eine Pulsation der Elektrode und durch den anliegenden Elektrolytdruck ausgetauscht, wobei durch Anlegen einer Spannung bzw. eines Stroms letztendlich das elektrochemische Absenken erfolgt. Im Sinne der hier vorliegenden Erfindung wird der angelegte Strom bzw. die angelegte Spannung zeitlich gepulst. Die oder jede anodisch geschaltete Arbeitselektrode wird demnach mit einer gepulsten Hochstrom-Niederspannungs-Beaufschlagung betrieben. Dabei wird vorzugsweise periodisch zwischen zwei Stromstärken bzw. zwei Spannungspotentialen hin- und hergeschaltet. Die Pulsfrequenz für den Strom liegt dabei vorzugsweise zwischen 1 Hz und 10 kHz. Die Stromstärke bzw. das Spannungspotential und/oder die Pulsfrequenz werden dabei beim elektrochemischen Absenken so gewählt, dass eine Passivierung im Bereich des abzutragenden Rotorscheibengrundkörpers vermieden wird, sodass die gesamte Absenkung vorzugsweise in einem Arbeitsgang durchgeführt werden kann.

Im Sinne der hier vorliegenden Erfindung wird während des elektrochemischen Absenkens zwischen dem Rotorscheibengrundkörper und der oder jeder Arbeitselektrode ein Spalt von weniger als 0,5 mm, insbesondere von weniger als 0,05 mm, eingehalten. Während des elektrochemischen Absenkens wird dabei die Abmessung des oder jeden Spalts erfasst und abhängig hiervon derart geregelt, dass die Spaltmaße von weniger als 0,5 mm, vorzugsweise von weniger als 0,05 mm, während des gesamten Absenkvorgangs eingehalten werden. Die Abstandsmessung bzw. Spaltmessung erfolgt dabei vorzugsweise auf Basis einer Analyse des Strom-Spannungsverhaltens beim elektrochemischen Absenken, indem hierzu dem zum Absenken angelegten Strom entweder ein Wechselstrom überlagert wird ,oder indem durch kurzes, periodisches Ab- und Anschalten des zum elektrochemischen Absenken angelegten Stroms zur Spaltmessung geeignete Verfahrensbedingungen geschaffen werden. Während des elektrochemischen Absenkens wird der oder jeder Spalt zwischen dem Rotorscheibengrundkörper und der oder jeder Arbeitselektrode kontinuierlich mit dem Elektrolyt gespült. Hierzu wird eine Zwangsströmung des Elektrolyts durch den oder jeden Spalt etabliert, was mit Hilfe einer Pumpe, eines Rührwerks oder einer Düse realisiert werden kann. Vorzugsweise führt jede Elektrode eine pulsierende Bewegung aus, die den Austausch des Elektrolyt im Spalt zwischen Grundkörper und Elektrode gewährleistet.

Bei der Herstellung von aerodynamischen Strukturen im Bereich der Schaufelblätter, also im Bereich einer Saugseite sowie einer Druckseite der Schaufelblätter, kann im Sinne der hier vorliegenden Erfindung so vorgegangen werden, dass die Saugseitenkontur und die Druckseitenkontur eines Schaufelblatts entweder zeitlich hintereinander bzw. getrennt oder auch gleichzeitig bzw. parallel (bevorzugter Fall) elektrochemisch abgesenkt werden. In dem Fall, in dem das Absenken zeitlich hintereinander erfolgt, wird einseitig abgesenkt; in dem Fall, in dem gleichzeitig abgesenkt wird, erfolgt ein beidseitiges Absenken im Bereich eines Schaufelblatts.

Beim gleichzeitigen und beidseitigen Absenken der Saugseitenkontur und der Druckseitenkontur eines Schaufelblatts ergibt sich eine weitere bevorzugte Weiterbildung des Verfahrens aus der Anordnung der Elektroden für die Druckseite und Saugseite des Schaufelprofils. Damit die sich bei dem engen Spalt durch die Pulsation der Elektroden ergebenden Druckkräfte die Schaufel nicht verformen, wird das Schaufelprofil synchron von beiden Seiten hergestellt. Dabei sind die Hauptbewegungsrichtungen der Elektrodenpaare V-förmig. Damit kann das Schaufelprofil komplett in einem Arbeitsgang inklusive der Kanten, Übergangsradien und dem anteiligen Bereich des Ringraums endbearbeitet werden. Die V-förmige Anordnung der Elektrodenpaare kann zusammen mit den notwendigen Achsantrieben für die Vorschubbewegung und die Elektrodenpulsation an mehreren Stellen am Rotorscheibenkörper angeordnet werden, so dass sich die Bearbeitungszeit entsprechend verringert.

Beim gleichzeitigen Ansenken von Saugseitenkontur und Druckseitenkontur an einem Schaufelblatt nähert sich demnach ein Elektrodenpaar V-förmig einer Endkontur, um in einem Arbeitsgang die Saugseite und die Druckseite, die Vorderkante und die Hinterkante, die Übergangsradien zum Ringraum und den jeweiligen anteiligen Bereich des Ringraums auf Endkontur abzusenken, wobei das Elektrodenpaar das Schaufelblatt in der Endposition der Elektrodenbewegung vollständig und ohne nachweisbaren Übergang an der Schaufelkontur umschließt. Eine Trennstelle zwischen den Elektroden für die Saugseite und die Druckseite liegt im zusammengefahrenen Zustand neben der Vorderkante bzw. der Hinterkante, damit die Ausrundung der Schaufelkanten nicht durch Kanteneffekte der Elektroden gestört wird.

Im Sinne der hier vorliegenden Erfindung wird demnach ein Verfahren zur Herstellung aerodynamischer Strukturen bei der Fertigung integral beschaufelter Gasturbinenrotoren vorgeschlagen, bei welchem in einen Rotorscheibengrundkörper mit Hilfe einer elektrochemischen Bearbeitung unter Verwendung gepulster Ströme die aerodynamischen Strukturen abgesenkt werden. Die elektrochemische Bearbeitung erfolgt unter Verwendung mindestens einer Arbeitselektrode, wobei zwischen der oder jeder Arbeitselektrode und dem Rotorscheibengrundkörper ein Spalt von weniger als 0,5 mm, vorzugsweise von weniger als 0,05 mm, eingehalten wird. Aus diesem Spalt wird abgetragenes Material durch eine pulsförmige Bewegung der Elektrode hervorgerufene Zwangsströmung des Elektrolyten ausgespült. Das erfindungsgemäße Verfahren erlaubt die Herstellung endkonturfertiger Blisk-Strukturen für Gasturbinenrotoren, die im Verdichterbereich und im Turbinenbereich eines Gasturbinenflugtriebwerks eingesetzt werden können.

## Patentansprüche

1. Verfahren zum Herstellen aerodynamischer Strukturen bei der Fertigung von integral beschaufelten Gasturbinenrotoren, wobei an einem Rotorscheibengrundkörper aerodynamische Strukturen eines integral beschaufelten Gasturbinenrotors durch Absenken mit einem elektrochemischen Abtragprozess, nämlich durch einen Precise Electro Chemical Machining (PECM)-Prozess, endkonturgenau hergestellt werden, mit folgenden Schritten:
a) Bereitstellen eines Rotorscheibengrundkörpers aus einem schwer zerspanbaren Werkstoff;
b) Abtragen des Werkstoffes zwischen den Schaufelblättern bis auf ein bestimmtes Aufmass durch einen Abtragsprozess; **gekennzeichnet durch** folgende Schritte:
c) Bereitstellen mindestens einer Arbeitselektrode zur Finishbearbeitung mindestens einer aerodynamischen Struktur eines integral beschaufelten Gasturbinenrotors, wobei die Kontur der oder jeder Arbeitselektrode an die Kontur der mit der jeweiligen Arbeitselektrode herzustellenden, aerodynamischen Struktur derart angepasst ist, dass beim Absenken ein Spalt zwischen dem Rotorscheibengrundkörper.und einer Arbeitselektrode in etwa gleich groß ist;
d) Absenken der oder jeder aerodynamischen Struktur **durch** Anordnen des Rotorscheibengrundkörpers und der oder jeder Arbeitselektrode in einem Elektrolyten und **durch** Anlegen einer Spannung bzw. eines Stroms, wobei der angelegte Strom bzw. die angelegte Spannung zeitlich gepulst wird;
e) Zwangsspülen des mit Elektrolyten gefüllten Spalts zwischen der aerodynamischer Struktur und der oder jeder Arbeitselektrode **durch** eine pulsierende Bewegung der oder jeder Arbeitselektrode.

2. Verfahren nach Anspruch 1,
**dadurch gekennzeichnet,**
**dass** ein Rotorscheibengrundkörper aus einer Nickelbasislegierung oder einer Titanbasislegierung oder einer Kobaltbasislegierung bereitgestellt wird.

3. Verfahren nach Anspruch 1 oder 2,
**dadurch gekennzeichnet,**
**dass** die oder jede Arbeitselektrode eine pulsierende Bewegung ausführt um den Elektrolytaustausch im Spalt zwischen der aerodynamischen Struktur und der Elektrode zu gewährleisten.

4. Verfahren nach einem oder mehreren der Ansprüche 1 bis 3,
**dadurch gekennzeichnet,**
**dass** während des Absenkens ein Spalt von kleiner als 0,5 mm eingehalten wird.

5. Verfahren nach Anspruch 4,
**dadurch gekennzeichnet,**
**dass** während des Absenkens ein Spalt von kleiner als 0,05 mm eingehalten wird.

6. Verfahren nach einem oder mehreren der Ansprüche 1 bis 5,
**dadurch gekennzeichnet,**
**dass** während des Absenkens die Abmessung des oder jedes Spalts gemessen und anhängig hiervon derart geregelt wird, sodass während des Absenkens ein Spalt von kleiner als 0,5 mm, insbesondere von kleiner als 0,05 mm, eingehalten wird.

7. Verfahren nach einem oder mehreren der Ansprüche 1 bis 6,
**dadurch gekennzeichnet,**
**dass** der zum Absenken angelegte Strom bzw. die angelegte Spannung derart gepulst wird, dass periodisch zwischen zwei Stromstärken bzw. Spannungspotentialen hin- und hergeschaltet wird.

8. Verfahren nach Anspruch 7,
**dadurch gekennzeichnet,**
**dass** die Pulsfrequenz für den Strom bzw. die Spannung zwischen 1 Hz und 10 kHz liegt.

9. Verfahren nach Anspruch 7 oder 8,
**dadurch gekennzeichnet,**
**dass** die Stromstärke bzw. das Spannungspotential und/oder die Pulsfrequenz des zum Absenken angelegten Stroms so gewählt werden, dass eine Passivierung vermieden wird, so dass die gesamte Absenkung in einem Arbeitsgang durchgeführt werden kann.

10. Verfahren nach einem oder mehreren der Ansprüche 1 bis 9,
**dadurch gekennzeichnet,**
**dass** während des Absenkens der oder jeder Spalt zwischen dem Rotorscheibengrundkörper und einer Arbeitselektrode kontinuierlich mit Elektrolyt, insbesondere über eine Zwangströmung des Elektrolyts durch den oder jeden Spalt, gespült wird.

11. Verfahren nach einem oder mehreren der Ansprüche 1 bis 10,
**dadurch gekennzeichnet, dass**
am Rotorscheibengrundkörper als aerodynamische Strukturen Schaufelblattkonturen von Laufschaufeln abgesenkt werden, wobei eine Saugseitenkontur und eine Druckseitenkontur eines Schaufelblatts zeitlich hintereinander bzw. getrennt abgesenkt werden.

12. Verfahren nach einem oder mehreren der Ansprüche 1 bis 11,
**dadurch gekennzeichnet**,
am Rotorscheibengrundkörper als aerodynamische Strukturen Schaufelblattkonturen von Laufschaufeln abgesenkt werden, wobei eine Saugseitenkontur und eine Druckseitenkontur eines Schaufelblatts gleichzeitig bzw. parallel abgesenkt werden.

13. Verfahren nach Anspruch 12,
**dadurch gekennzeichnet, dass**
sich beim gleichzeitigen Ansenken ein Elektrodenpaar V-förmig einer Endkontur nähert, um in einem Arbeitsgang die Saugseite und die Druckseite, die Vorderkante und die Hinterkante, die Übergangsradien zum Ringraum und den jeweiligen anteiligen Bereich des Ringraums auf Endkontur abzusenken, wobei das Elektrodenpaar das Schaufelblatt in der Endposition der Elektrodenbewegung vollständig und ohne nachweisbaren Übergang an der Schaufelkontur umschließt.

14. Verfahren nach Anspruch 13,
**dadurch gekennzeichnet,**
**dass** eine Trennstelle zwischen den Elektroden für die Saugseite und die Druckseite im zusammengefahrenen Zustand neben der Vorderkante bzw. der Hinterkante liegt, damit die Ausrundung der Schaufelkanten nicht durch Kanteneffekte der Elektroden gestört wird.

## Claims

1. Method for producing aerodynamic structures in production of gas turbine rotors with integral blades, aerodynamic structures of a gas turbine rotor with integral blades being produced with precise final contours on a rotor disc base body by sinking with an electrochemical removal process, namely by a precise electrochemical machining (PECM) process, with the following steps:
a) provision of a rotor disc base body of a material that is hard to machine;
b) removal of the material between the blades, apart from a certain machining allowance, by a removal process;
**characterized by** the following steps:
c) provision of at least one working electrode for finish processing of at least one aerodynamic structure of a gas turbine rotor with integral blades, the contour of the or each working electrode being adapted to the contour of the aerodynamic structure to be produced using the working electrode, in such a way that, on sinking, a gap between the rotor disc base body and a working electrode is approximately equally large;
d) sinking the or each aerodynamic structure by arranging the rotor disc base body and the or each working electrode in an electrolyte, and by applying a voltage or current, the applied current or applied voltage being pulsed over time;
e) forced purging of the gap filled with electrolyte between the aerodynamic structure and the or each working electrode by a pulsing motion of the or each working electrode.

2. Method according to Claim 1,
**characterized in that**
a rotor disc base body is produced from a nickel-based alloy or titanium-based alloy or cobalt-based alloy.

3. Method according to Claim 1 or 2,
**characterized in that**
the or each working electrode executes a pulsing motion, to ensure the electrolyte exchange in the gap between the aerodynamic structure and the electrode.

4. Method according to one or more of Claims 1 to 3, **characterized in that**
during the sinking, a gap of less than 0.5 mm is maintained.

5. Method according to Claim 4,
**characterized in that**
during the sinking, a gap of less than 0.05 mm is maintained.

6. Method according to one or more of Claims 1 to 5,
**characterized in that**
during the sinking, the size of the or each gap is measured, and regulation takes place in dependence on the measurement in such a way that during the sinking a gap of less than 0.5 mm, in particular less than 0.05 mm, is maintained.

7. Method according to one or more of Claims 1 to 6,
**characterized in that**
the current or voltage which is applied for sinking is pulsed so that periodically switching takes place in both directions between two amperages or voltage potentials.

8. Method according to Claim 7,
**characterized in that**
the pulse frequency for the current or voltage is between 1 Hz and 10 kHz.

9. Method according to Claim 7 or 8,
**characterized in that**
the amperage or voltage potential and/or the pulse frequency of the current which is applied for sinking is chosen so that passivation is avoided, so that the whole sinking can be carried out in one operation.

10. Method according to one or more of Claims 1 to 9,
**characterized in that**
during the sinking, the or each gap between the rotor disc base body and a working electrode is continuously purged with electrolyte, in particular by forced flow of the electrolyte through the or each gap.

11. Method according to one or more of Claims 1 to 10,
**characterized in that**
blade contours of rotor blades are sunk as aerodynamic structures on the rotor disc base body, a suction side contour and a pressure side contour of a blade being sunk one after the other in time or separately.

12. Method according to one or more of Claims 1 to 11,
**characterized in that**
blade contours of rotor blades are sunk as aerodynamic structures on the rotor disc base body, a suction side contour and a pressure side contour of a blade being sunk simultaneously or in parallel..

13. Method according to Claim 12,
**characterized in that**
in the case of simultaneous sinking, an electrode pair approaches a final contour in V form, in order to sink, in one operation, the suction side and the pressure side, the front edge and the rear edge, the transition radii to the annulus and the appropriate proportional region of the annulus to final contour, wherein the electrode pair encloses the blade in the final position of the electrode motion completely and without demonstrable transition at the blade contour.

14. Method according to Claim 13,
**characterized in that**
a separation point between the electrodes for the suction side and pressure side in the pushed-together state is adjacent to the front edge or rear edge, so that the ogee of the blade edges is not disturbed by edge effects of the electrodes.

## Revendications

1. Procédé de fabrication de structures aérodynamiques pour la production de rotors de turbines à gaz à aubes intégrées, où des structures aérodynamiques d'un rotor de turbine à gaz à aubes intégrées sont fabriquées avec une précision de contour final sur un corps de base discoïde du rotor par enlèvement de matière au moyen d'un procédé d'usinage électrochimique, en l'occurrence un processus d'usinage électrochimique de précision (PECM), comportant les étapes suivantes :
a) préparation d'un corps de base discoïde du rotor à partir d'un matériau difficilement usinable par enlèvement de copeaux ;
b) enlèvement de matière entre les aubes, jusqu'à une quantité déterminée, au moyen d'un procédé d'enlèvement de matière ;
**caractérisé par** l'étape suivante :
c) préparation d'au moins une électrode de travail pour l'usinage de finition d'au moins une structure aérodynamique d'un rotor de turbine à gaz à aubes intégrées, le contour de l'électrode de travail ou de chaque électrode de travail étant ajusté au contour de la structure aérodynamique à réaliser avec l'électrode de travail respective, de telle manière qu'un interstice entre le corps de base discoïde du rotor et une électrode de travail soit sensiblement uniforme lors de l'enlèvement de matière ;
d) enlèvement de matière sur la structure aérodynamique ou sur chaque structure aérodynamique par placement du corps de base discoïde du rotor et de l'électrode de travail ou de chaque électrode de travail dans un électrolyte et par application d'une tension ou d'un courant, le courant appliqué ou la tension appliquée étant pulsés temporellement ;
e) rinçage forcé de l'interstice rempli d'électrolyte entre la structure aérodynamique et l'électrode de travail ou chaque électrode de travail par mouvement pulsé de l'électrode de travail ou de chaque électrode de travail.

2. Procédé selon la revendication 1, **caractérisé en ce qu'**un corps de base discoïde du rotor est préparé dans un alliage à base de nickel, un alliage à base de titane ou un alliage à base de cobalt.

3. Procédé selon la revendication 1 ou la revendication 2, **caractérisé en ce que** l'électrode de travail ou chaque électrode de travail exécute un mouvement pulsé pour permettre l'échange d'électrolyte dans l'interstice entre la structure aérodynamique et l'électrode.

4. Procédé selon l'une ou plusieurs des revendications 1 à 3, **caractérisé en ce qu'**un interstice inférieur à 0,5 mm est respecté pendant l'enlèvement de matière.

5. Procédé selon la revendication 4, **caractérisé en ce qu'**un interstice inférieur à 0,05 mm est respecté pendant l'enlèvement de matière.

6. Procédé selon l'une ou plusieurs des revendications 1 à 5, **caractérisé en ce que** les dimensions de l'interstice ou de chaque interstice sont mesurées pendant l'enlèvement de matière et ajustées en fonction de cette mesure, de manière à respecter un interstice inférieur à 0,5 mm, en particulier inférieur à 0,05 mm pendant l'enlèvement de matière.

7. Procédé selon l'une ou plusieurs des revendications 1 à 6, **caractérisé en ce que** le courant appliqué ou la tension appliquée pour l'enlèvement de matière sont pulsés de manière à effectuer une commutation en va-et-vient périodique entre deux intensités de courant ou potentiels de tension.

8. Procédé selon la revendication 7, **caractérisé en ce que** la fréquence d'impulsion pour le courant ou la tension est comprise entre 1 Hz et 10 kHz.

9. Procédé selon la revendication 7 ou la revendication 8, **caractérisé en ce que** l'intensité de courant ou le potentiel de tension et/ou la fréquence d'impulsion du courant appliqué pour l'enlèvement de matière sont sélectionnés de manière à éviter une passivation, si bien que l'enlèvement de matière peut être intégralement exécuté en une seule phase de travail.

10. Procédé selon l'une ou plusieurs des revendications 1 à 9, **caractérisé en ce que**, pendant l'enlèvement de matière, l'interstice ou chaque interstice entre le corps de base discoïde du rotor et une électrode de travail est rincé de manière continue avec de l'électrolyte, en particulier par un écoulement forcé de l'électrolyte au travers de l'interstice ou de chaque interstice.

11. Procédé selon l'une ou plusieurs des revendications 1 à 10, **caractérisé en ce que** des contours d'aubes mobiles sont usinés par enlèvement de matière sur le corps de base discoïde du rotor en tant que structures aérodynamiques, un contour du côté d'aspiration et un contour du côté de refoulement d'une aube étant usinés successivement ou séparément.

12. Procédé selon l'une ou plusieurs des revendications 1 à 11, **caractérisé en ce que** des contours d'aubes mobiles sont usinés par enlèvement de matière sur le corps de base discoïde du rotor en tant que structures aérodynamiques, un contour du côté d'aspiration et un contour du côté de refoulement d'une aube étant usinés simultanément ou parallèlement.

13. Procédé selon la revendication 12, **caractérisé en ce qu'**une paire d'électrodes se rapproche en V d'un contour final lors de l'usinage simultané par enlèvement de matière, pour usiner en une seule phase de travail le contour final du côté d'aspiration et du côté de refoulement, du bord avant et du bord arrière, des rayons de raccordement à l'espace annulaire et de la zone proportionnelle correspondante de l'espace annulaire, la paire d'électrodes entourant l'aube en position finale du déplacement d'électrode, complètement et sans passage manifeste sur le contour d'aube.

14. Procédé selon la revendication 13, **caractérisé en ce qu'**en état d'assemblage, un point de séparation entre les électrodes pour le côté d'aspiration et le côté de refoulement est situé à côté du bord avant ou du bord arrière, pour que l'arrondi des arêtes d'aubes ne soit pas perturbé par des effets de bord des électrodes.
